# EUROPEAN PATENT APPLICATION

(11) **EP 4 568 346 A1**
(43) Date of publication of application: **11.06.2025**
(21) Application number: 23849782.0
(22) Date of filing: 21.06.2023
(51) Int. Cl.: H04W 36/24, H04W 4/42, H04W 36/16, H04W 84/00

(54) **MOBILE COMMUNICATION DEVICE, METHOD FOR CONTROLLING SAME, AND PROGRAM**

(30) Priority: 04.08.2022 JP 2022124992
(71) Applicant: CANON KABUSHIKI KAISHA, Tokyo 146-8501 (JP)
(72) Inventor: HORIO, Daisuke, Tokyo 146-8501 (JP)
(74) Representative: Canon Europe Limited
(86) International application number: PCT/JP2023/022867
(87) International publication number: WO 2024/029222

(57) **Abstract**

An IAB node performs, before performing handover in which a connection destination for communication with a core network is switched to another IAB donor or node, determination processing of determining, for each UE connected to the IAB node, whether or not the connection destination is to be switched together with the IAB node, based on whether or not a condition is satisfied. The IAB node further performs, for a UE for which it has been determined in the determination processing that the connection destination is not to be switched together with the IAB node, communication control for handover to switch the connection destination from the IAB node to another wireless base station.

## Description

### TECHNICAL FIELD

The present invention relates to a mobile communication device, a method for controlling the same, and a program.

### BACKGROUND ART

The standardization of integrated access and backhaul (IAB) as a backhaul communication technology is progressing in the 3rd Generation Partnership Project (3GPP (registered trademark)). In IAB, a radio resource used for an access line between a base station and a user terminal (user equipment (UE)) is also used for a backhaul line. For example, in IAB, radio resources of a millimeter wave band such as the 28 GHz band are used (PTL 1). When IAB is used for the backhaul line, a relay device (IAB node) can relay communication between a base station device (IAB donor) and a UE via a wireless line, thereby making it possible to improve the connectivity of the radio access network.

In order to further improve the connectivity of radio access networks, consideration is being given to mobile IAB nodes installed in vehicles such as buses, taxis, and trains. The use of mobile IAB nodes is expected to not only provide good communication services within vehicles, but also improve communication quality in local areas with poor radio wave conditions or in congested areas. As a mobile IAB node moves, the mobile IAB node performs handover to switch the connection destination to another IAB donor or an IAB node. A technology has been proposed for determining and assisting the handover of mobile stations (wireless terminals) that are under the control of a relay node that relays communication between the mobile stations and a base station, as with a mobile IAB node (PTL 2).

### CITATION LIST

### PATENT LITERATURE

PTL1: Japanese Patent Laid-Open No. 2019-534625
PTL2: Japanese Patent No. 5800024

### SUMMARY OF INVENTION

### TECHNICAL PROBLEM

Until now, no mechanism has been provided for, when a mobile IAB node performs handover, distinguishing between whether or not a group handover of switching the connection destination of a UE together with the node is to be performed for each UE under control of the node. For this reason, for example, appropriate communication control (handover processing) has not been able to be performed individually for UEs located inside and outside a vehicle in which a mobile IAB node is installed.

### SOLUTION TO PROBLEM

The present invention provides a technique for, when a mobile communication device (mobile IAB node) having a relay function performs handover, performing appropriate communication control individually for each wireless terminal (UE) under control of the mobile communication device.

A mobile communication device according to one aspect of the present invention is a mobile communication device having a relay function of relaying communication between a wireless base station and a wireless terminal, the mobile communication device comprising: determining means for performing, before performing handover in which a connection destination for communication with a core network is switched to another wireless base station or another communication device having the relay function, determination processing of determining, for each wireless terminal connected to the mobile communication device, whether or not the connection destination is to be switched together with the mobile communication device, based on whether or not a predetermined condition is satisfied; and controlling means for performing, for a wireless terminal for which it has been determined in the determination processing that the connection destination is not to be switched together with the mobile communication device, communication control for handover to switch the connection destination from the mobile communication device to another wireless base station.

### ADVANTAGEOUS EFFECTS OF INVENTION

According to the present invention, when a mobile communication device (mobile IAB node) having a relay function performs handover, it is possible to perform appropriate communication control individually for each wireless terminal (UE) under control of the mobile communication device.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.

FIG. 1 is a diagram showing an example of the configuration of a wireless communication system.
FIG. 2A is a block diagram showing an example of the hardware configuration of an IAB node.
FIG. 2B is a block diagram showing an example of the hardware configuration of an IAB node.
FIG. 3 is a block diagram showing an example of the functional configuration of an IAB node.
FIG. 4 is a flowchart showing an example of a procedure of handover processing performed in an IAB node.
FIG. 5 is a flowchart showing an example of a procedure of determination processing for determining UE inclusion in group handover (S401).
FIG. 6 is a sequence diagram showing an example of handover processing for a UE to be excluded from group handover.
FIG. 7 is a sequence diagram showing an example of group handover processing for a UE to be included in group handover.
FIG. 8 is a sequence diagram showing an example of group handover processing for a UE to be included in group handover (second embodiment).

### DESCRIPTION OF EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

### First Embodiment

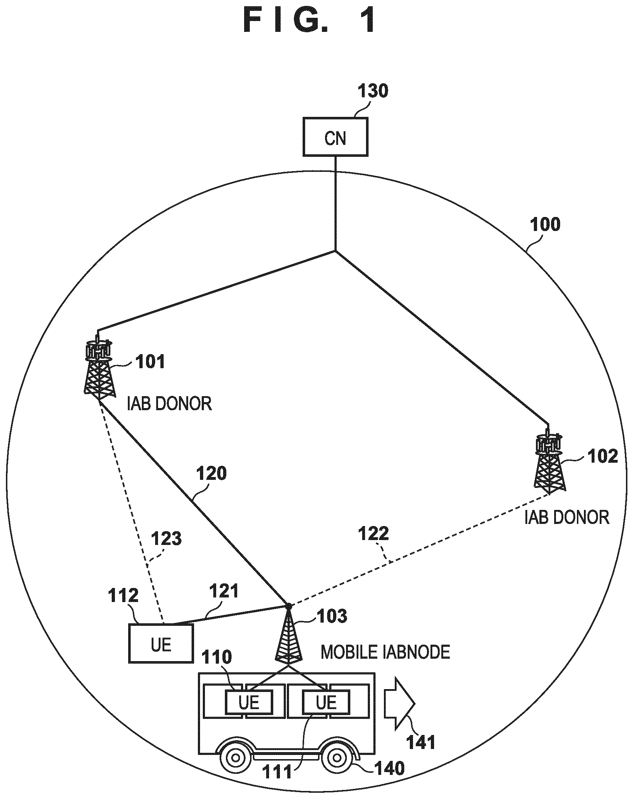

FIG. 1 illustrates an example of the configuration of a wireless communication system according to an embodiment of the present disclosure. A wireless communication system 100 is configured as a relay communication system that uses integrated access and backhaul (IAB) defined in 3GPP cellular communication standards. The wireless communication system 100 includes IAB donors 101 and 102 and an IAB node 103, which are connected to a core network (CN) 130. The CN 130 includes one or more network nodes (control nodes) that perform various types of processing such as user terminal (UE) authentication and network slice usage registration.

The IAB donors 101 and 102 are wireless base stations in a radio access network connected to the CN 130, and are capable of providing communication services to UEs located within their respective coverage areas (cells). The IAB donors 101 and 102 establish a wireless connection with the terminal function (mobile termination) of an IAB node located within their respective coverage areas (e.g., the IAB node 103). The IAB donors 101 and 102 perform setting using the backhaul adaptation protocol (BAP), and can enable a wirelessly connected IAB node to function as a relay device (a communication device having a relay function).

The IAB node 103 is an example of a mobile communication device (mobile communication node) having a relay function for relaying communication between an IAB donor, which is a wireless base station, and a UE, which is a wireless terminal. The relay function performs relaying according to IAB in the 3GPP. Note that the IAB node 103 can also establish a connection with another IAB node that is directly or indirectly connected to the IAB donor 101. In this case, the IAB node 103 establishes a connection with the IAB donor 101 via the other IAB node, and sets a communication path that is relayed through the other IAB node. Communication between the IAB node 103 and the IAB donor 101 is performed via the other IAB node.

In the example of FIG. 1, the IAB node 103 is connected to the IAB donor 101, and a communication path is set between the IAB donor 101 and the IAB node 103. The IAB node 103 is configured as a mobile IAB node installed in a bus 140. As the bus 140 moves, the IAB node 103 can move within the coverage areas of other IAB donors (wireless base stations) and IAB nodes (relay devices). The IAB node 103 forms a coverage area (cell) capable of providing communication services to UEs located inside and outside the bus 140. Note that in the present embodiment, an example is given in which the IAB node 103 is installed in the bus 140, but the IAB node 103 may also be an IAB node attached to a person or installed in a moving object such as an aircraft, a ship, or a vehicle other than a bus.

The UEs 110 and 111 are mobile terminals used by passengers riding in the bus 140. The UE 112 may be, for example, a mobile terminal used by a pedestrian located outside the bus 140, or a mobile terminal used by a user in a vehicle located outside bus 140 or a mobile terminal installed in the vehicle. The UEs 110 to 112 are located within the coverage area of the IAB node 103. In the example of FIG. 1, all of the UEs 110 to 112 are also located within the coverage area of the IAB donor 101, but are connected to the IAB node 103 due to having better wireless communication quality (signal strength).

It will be assumed here that the UEs 110 to 112 are performing ongoing communication with the CN 130 via the IAB node 103 and the IAB donor 101 for the execution of an application, such as a call, a video conference, or an online game. These applications are examples of applications for utilizing a service in which an interruption in communication connection is not acceptable. In this case, the IAB donor 101 and the IAB node 103 hold session information for continuing communication between each of the UEs and the CN 130.

The IAB node 103 installed in the bus 140 establishes a wireless connection with the IAB donor 101 within the coverage area of the IAB donor 101. The signal strength (received signal strength) of a communication path 120 with the IAB donor 101 decreases as the bus 140 moves in a forward travel direction 141, and the IAB node 103 thus performs switching (handover) of the connection destination from the IAB donor 101 to another IAB donor or node.

In the example of FIG. 1, the IAB donor 102 forms a coverage area ahead of the bus 140 in the forward travel direction 141. For example, when the signal strength (received signal strength) of a broadcast signal received from the IAB donor 102 becomes suitable (e.g., a predetermined level or higher), the IAB node 103 performs handover from the IAB donor 101 to the IAB donor 102. As a result, the IAB node 103 switches the connection destination for communication with the CN 130 from the IAB donor 101 to the IAB donor 102. In other words, the IAB node 103 switches the communication path for communication with the CN 130 from the communication path 120 passing through the IAB donor 101 to a communication path 122 passing through the IAB donor 102.

In a case where the IAB node 103 performs handover as described above, for example, group handover can be performed, that is to say the connection destinations of all UEs connected to the IAB node 103 (i.e., all UEs under control of the IAB node 103) are collectively switched to the IAB donor 102. However, a situation may be conceivable in which it is desirable to perform different communication control (handover processing) for each UE under control of the IAB node 103 in accordance with the communication situation of the UE. For example, in the example of FIG. 1, it may be desirable to perform appropriate communication control individually for the UEs 110 and 111 located inside the bus 140 and the UE 112 located outside bus 140. Specifically, it is envisioned that the UEs 110 and 111 inside the bus 140 perform group handover together with the IAB node 103 so that the communication quality is maintained even after the handover. On the other hand, in the case of the UE 112 outside the bus 140, there is a possibility that communication quality can be maintained by performing handover to another wireless base station rather than performing group handover together with the IAB node 103.

Therefore, the IAB node 103 of the present embodiment is configured to be able to, when performing handover to another IAB donor or node, distinguish between whether or not to perform group handover (group HO) for each UE under control of the IAB node 103. This makes it possible to realize, for example, appropriate communication control (handover processing) individually for UEs located inside and outside the bus 140 in which the IAB node 103 is installed.

Specifically, before performing handover to another IAB donor or node, the IAB node 103 performs determination processing, for each UE connected to the IAB node 103, of determining whether or not the UE is to be targeted for group HO for switching the connection destination together with the IAB node 103. In the determination processing, the IAB node 103 determines, for each connected UE, whether or not the UE is to be targeted for group HO based on whether or not the UE satisfies a later-described predetermined condition (group HO condition). Furthermore, for each UE determined not to be targeted for group HO in the determination processing, the IAB node 103 performs communication control for handover to switch the connection destination from the IAB node 103 to another wireless base station. Also, for each UE determined to be targeted for group HO in the determination processing, the IAB node 103 executes group HO in which the IAB donor 102 is the handover destination. In this way, for example, even if the UEs connected to the IAB node 103 are executing applications in which an interruption in the communication connection is not acceptable, communication control can be performed such that the applications can be executed seamlessly after handover of the IAB node 103.

In the following, it is assumed that, through the above-described determination processing, the UEs located inside the bus 140 (the UEs 110 and 111) are determined to be targeted for group HO, and the UE located outside the bus 140 (the UE 112) is determined not to be targeted for group HO.

In the example of FIG. 1, the IAB node 103 performs the following communication control for each UE connected to the IAB node 103 in accordance with the result of the above-described determination processing. In the case of the UEs that are located inside the bus 140 and have been determined to be targeted for group HO (the UEs 110 and 111), the IAB node 103 executes group HO for switching the connection destination to the IAB donor 102 together with the IAB node 103.

On the other hand, in the case of the UE that is located outside the bus 140 and has been determined not to be targeted for group HO (the UE 112), if a drop in communication quality is predicted, the IAB node 103 performs communication control for performing handover to the IAB donor 101. Accordingly, the communication path for communication between the UE 112 and the CN 130 is switched from the communication path 121 passing through the IAB node 103 to the communication path 123 passing through the IAB donor 101.

### < Device Configuration>

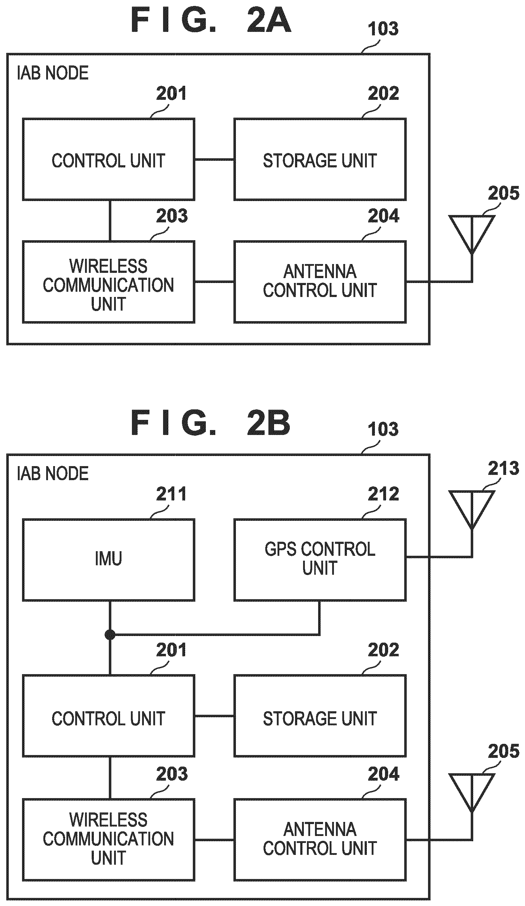

FIG. 2A is a block diagram showing an example of the hardware configuration of the IAB node 103. The IAB node 103 includes a control unit 201, a storage unit 202, a wireless communication unit 203, an antenna control unit 204, and an antenna 205. Note that the IAB node 103 may further include other hardware components, and may not include some of the components shown in FIG. 2A.

The control unit 201 includes one or more processors such as a central processing unit (CPU) or a micro processing unit (MPU). Note that the control unit 201 may include a field programmable gate array (FPGA), a digital signal processor (DSP), an application specific integrated circuit (ASIC), or the like. The control unit 201 performs overall control of the device by executing a control program stored in the storage unit 202, for example.

The storage unit 202 includes one or more storage devices (memories), such as a RAM (random access memory), a ROM (read only memory), a HDD (hard disk drive), or an SSD (solid state drive), for example. The storage unit 202 is configured to store various programs (e.g., control programs) executed by the control unit 201, and various information used in processing performed by the control unit 201 (e.g., session information and communication quality information related to the UEs, and communication quality information related to the IAB donors 101 and 102).

The session information includes information such as an identifier (ID) that indicates a virtual communication path for data communication executed by an application. Note that the session information may include temporarily buffered data itself. The communication quality information includes information related to communication quality, such as a received signal strength indicator (RSSI), a modulation and coding scheme (MCS), a signal to noise ratio (SNR), and a communication speed.

The wireless communication unit 203 performs processing related to wireless communication (cellular communication) that complies with 3GPP standards, such as the Long Term Evolution (LTE) standard or the 5th generation (5G) standard. The wireless communication unit 203 includes circuits for communication processing, such as a baseband chip and a radio frequency (RF) chip. The antenna control unit 204 controls the antenna 205 used for wireless communication performed by the wireless communication unit 203. Also, the antenna control unit 204 can measure the communication quality based on a signal received by the antenna 205. The antenna control unit 204 may generate, as the communication quality information indicating the measurement result, for example, an RSSI indicating the received signal strength, or an SNR.

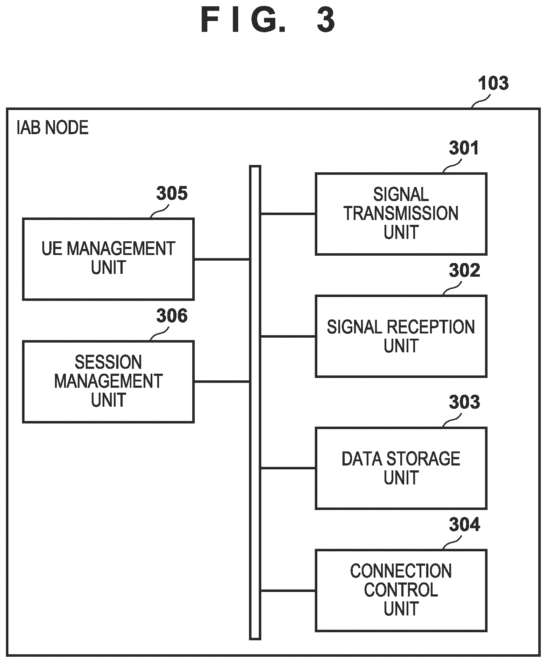

FIG. 3 is a block diagram showing an example of the functional configuration of the IAB node 103. The IAB node 103 includes a signal transmission unit 301, a signal reception unit 302, a data storage unit 303, a connection control unit 304, a UE management unit 305, and a session management unit 306. The functions of the blocks shown in FIG. 3 can be realized by the control unit 201 executing a control program stored in the storage unit 202.

The signal transmission unit 301 and the signal reception unit 302 control the wireless communication unit 203 to transmit and receive wireless signals to and from other IAB donors or nodes (e.g., the IAB donors 101 and 102) and UEs (e.g., the UEs 110 to 112). The signal transmission unit 301 and the signal reception unit 302 transmit and receive wireless signals that comply with 3GPP standards such as the LTE standard and the 5G standard. The data storage unit 303 stores various programs and various data (various information) in the storage unit 202 to hold them.

The connection control unit 304 performs processing related to UE connection and disconnection, such as the transmission and reception of radio resource control (RRC) messages between the UEs and the CN 130. The connection control unit 304 also performs processing related to connections with other IAB donors or nodes, and connections with the CN 130. The connection control unit 304 performs handover processing of the IAB node 103 itself, and handover processing of the UEs currently connected to the IAB node 103 (UEs under control of the IAB node 103). Furthermore, the connection control unit 304 controls the antenna control unit 204 during wireless communication. The connection control unit 304 acquires communication quality information from the antenna control unit 204, and sends the acquired communication quality information to the data storage unit 303 or the UE management unit 305.

The UE management unit 305 determines and manages UEs to be targeted for group HO and UEs not to be targeted for (UEs to be excluded from the target of) group HO when the IAB node 103 is to be handed over. The session management unit 306 manages session information of applications being executed by UEs connected to the IAB node 103. When a UE connected to the IAB node 103 is to be handed over, the session management unit 306 transfers the session information of the UE to the handover destination via the signal transmission unit 301.

### < IAB Node Handover Processing>

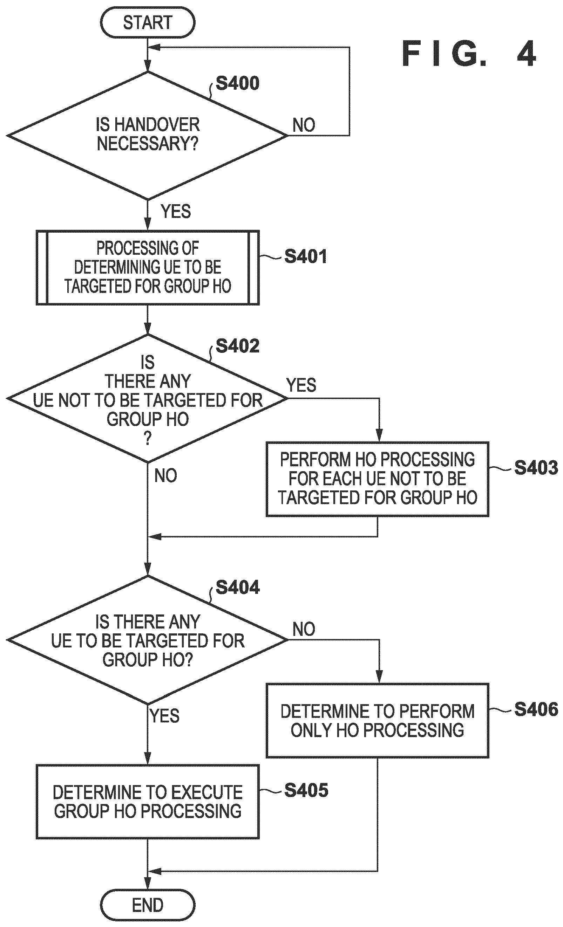

FIG. 4 is a flowchart showing an example of a procedure of handover processing (HO processing) in the IAB node 103 according to the present embodiment. Here, an example will be described in which the IAB node 103 is connected to the IAB donor 101 and performs HO processing to switch the connection destination from the IAB donor 101 to the IAB donor 102.

First, in step S400, the IAB node 103 judges whether or not a switch (handover) of the connection destination (IAB donor or node) is necessary. Specifically, the IAB node 103 judges whether or not it is necessary to switch the connection destination from the currently connected IAB node 103 to another IAB donor or node. For example, in a case of detecting that the RSSI in communication with the IAB donor 101 has dropped to a predetermined threshold value or lower, the IAB node 103 judges that switching of the connection destination has become necessary. This judgement may be made using not only the RSSI but also another parameter value (e.g., SNR) that indicates the communication quality in communication with the connected IAB donor or node. Furthermore, in the case where the IAB node 103 is installed in a bus or the like, the scheduled travel route may be determined in advance. If the scheduled travel route has been determined in advance in this manner, in addition to the communication quality, connection destination candidate information and connection destination location information are stored in the IAB node 103 as a pre-processing step. The IAB node 103 may be configured to judge whether or not switching is necessary by taking into account not only the communication quality but also the stored information and location information of the moving IAB node 103, as auxiliary information.

In step S400, in a case of judging that switching of the connection destination is not necessary, the IAB node 103 repeats the judgement of step S400, for example, at a predetermined time interval or according to a condition associated with movement. Here, the condition associated with movement may be, for example, the departure, stopping, or turning of the bus 140, or a condition based on location information or the like (e.g., the bus 140 has moved a predetermined distance). On the other hand, in a case of judging that switching of the connection destination is necessary, the IAB node 103 advances the process to step S401.

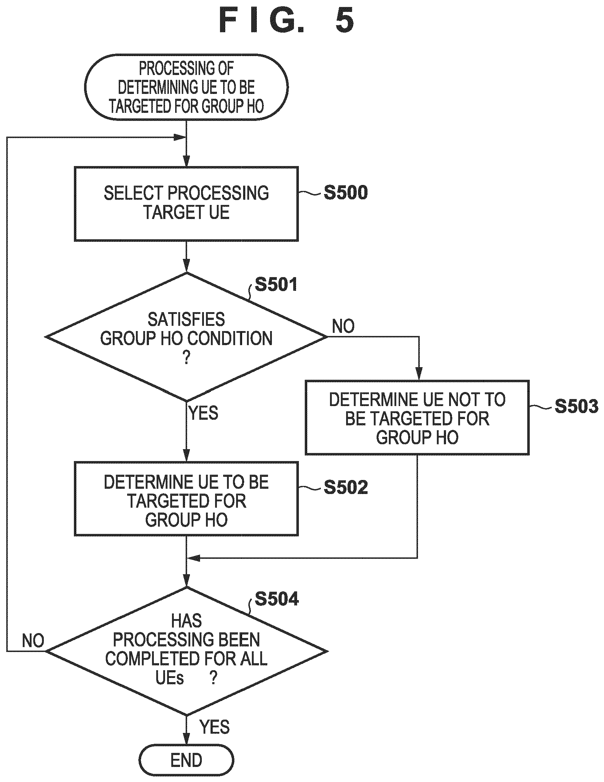

In step S401, the IAB node 103 performs determination processing of determining, for each UE connected to the IAB node 103, whether or not the UE is to be targeted for group HO (group HO target UE determination processing) according to the later-described procedure shown in FIG. 5. In this way, in a case where it is judged that handover of the IAB node 103 is necessary (in a case where execution of handover is predicted), the IAB node 103 performs group HO target UE determination processing. In this determination processing, for each of the UEs currently connected to the IAB node 103 (the UEs 110 to 112 in this example), the IAB node 103 determines whether the UE is a UE to be targeted for group HO or a UE not to be targeted for group HO. In a case where the determination processing of step S401 is completed, the IAB node 103 advances the process to the processing of step S402. In the following, a case is used as an example in which the UEs 110 and 111 are each determined to be a UE which is to be targeted for group HO, and the UE 112 is determined to be a UE which is not to be targeted for group HO in the determination processing in step S401.

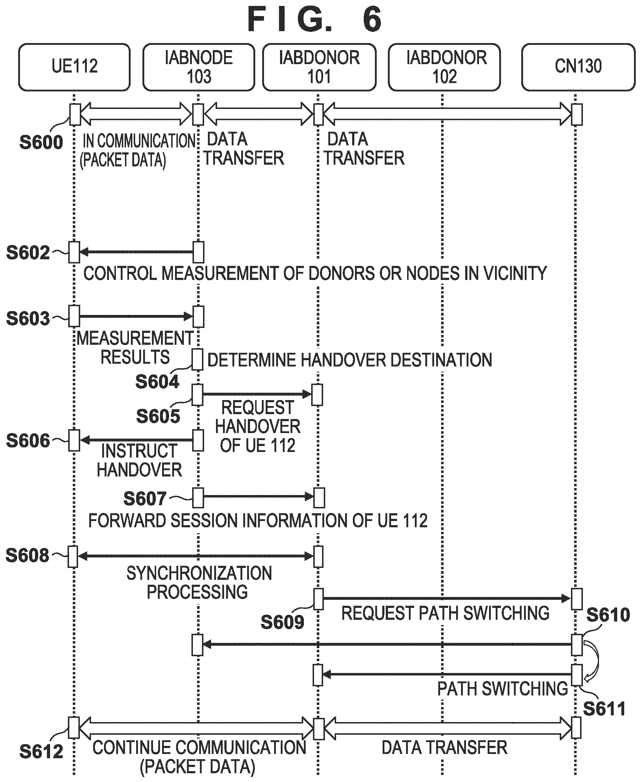

In step S402, the IAB node 103 judges whether or not there is any UE not to be targeted for group HO among the UEs currently connected to the IAB node 103, according to the result of the determination processing in step S401. The IAB node 103 advances the process to step S403 if there is a UE not to be targeted for group HO, and advances the process to step S404 if there is no UE not to be targeted for group HO. In step S403, for each UE not to be targeted for group HO (the UE 112 in this example), the IAB node 103 performs HO processing for handover from the IAB node 103 to another IAB donor or node. An example of HO processing for a UE not to be targeted for group HO will be described later with reference to FIG. 6. When the HO processing is complete for all UEs not to be targeted for group HO, the IAB node 103 advance the process to the processing of step S404.

In step S404, the IAB node 103 judges whether or not there is any UE to be targeted for group HO, according to the result of the determination processing in step S401. The IAB node 103 advances the process to step S405 if there is a UE to be targeted for group HO, and advances the process to step S406 if there is no UE to be targeted for group HO.

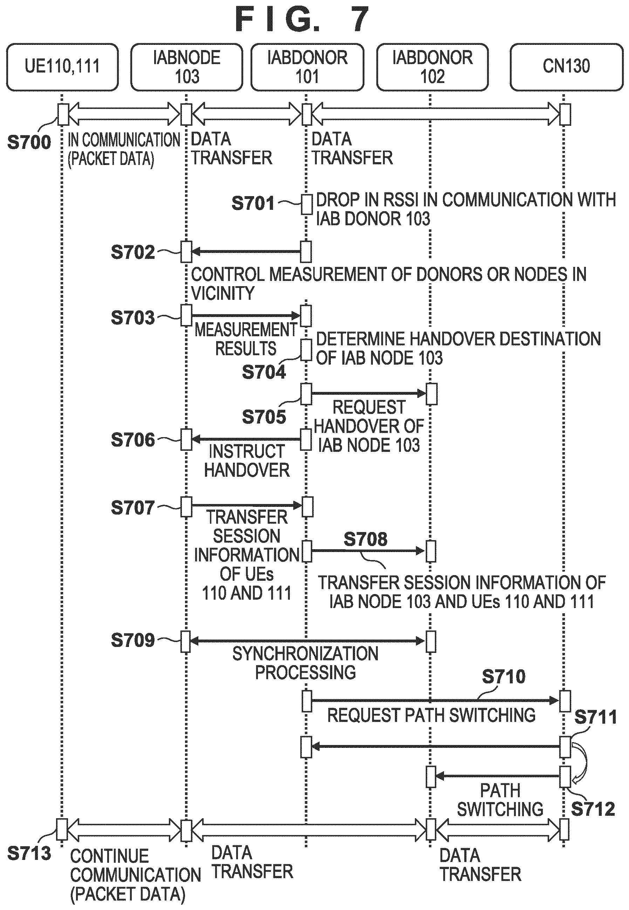

In step S405, the IAB node 103 determines to perform group HO processing to hand over the UEs targeted for group HO (in this example, the UEs 110 and 111), to another IAB donor or node (in this example, the IAB donor 102). Through this group HO processing, the UEs targeted for group HO are also handed over together to the handover destination of the IAB node 103 (the IAB donor 102 in this example) determined according to the movement of the IAB node 103. When performing handover to a handover destination determined according to movement of the IAB node 103, the IAB node 103 executes group HO in which the handover destination of the UEs determined targeted for group HO is also handed over to the handover destination determined according to movement. Note that an example of this group HO processing will be described later with reference to FIG. 7.

On the other hand, in step S406, since there is no UE to be targeted for group HO, the IAB node 103 determines to execute HO processing in which only the IAB node 103 is handed over to the handover destination determined according to movement of the IAB node 103 (in this example, is handed over to the IAB donor 102).

When the processing of step S405 or step S406 is completed, the IAB node 103 ends the processing according to the procedure of FIG. 4.

### < Group HO Target UE Determination Processing (S401)>

FIG. 5 is a flowchart showing an example of the procedure of determination processing executed in the above-described step S401 in the present embodiment to determine, for each UE connected to the IAB node 103, whether or not the UE is to be targeted for group HO (processing for determining UE inclusion in group HO). This determination processing is executed by the UE management unit 305 of the IAB node 103.

Note that in addition to being executed in step S401, the determination processing according to the procedure in FIG. 5 may also be executed at a different timing. For example, upon receiving a connection request from a new UE, the IAB node 103 (UE management unit 305) may execute the determination processing according to the procedure in FIG. 5 when the connection is permitted. Also, the IAB node 103 (UE management unit 305) may execute the determination processing according to the procedure of FIG. 5 periodically, or at timings based on the departure, stopping, or turning of the bus 140, or location information, for example. The UE management unit 305 manages information indicating the execution result of the determination processing as management information, and updates the management information every time the determination processing is executed.

In this determination processing, the IAB node 103 determines, for each UE connected to the IAB node 103, whether or not the UE is to be targeted for group HO, based on whether or not a predetermined group HO condition is satisfied. If a UE satisfies the group HO condition, the IAB node 103 determines that the UE is to be targeted for group HO. On the other hand, if a UE does not satisfy the group HO condition, the IAB node 103 determines that the UE is a UE not to be targeted for group HO (is a UE excluded from the target of group HO).

First, in step S500, the IAB node 103 selects, as a processing target UE, one UE that is connected to the IAB node 103 and has not been subjected to processing for determining the target of group HO, and advances the process to step S501.

In step S501, the IAB node 103 judges whether or not the processing target UE satisfies a predetermined group HO condition. In the present embodiment, the group HO condition is that the communication quality between the IAB node 103 and the processing target UE is good. More specifically, the group HO condition is set to the condition that the communication quality (a parameter value indicating the communication quality) is a predetermined threshold value or higher. If the communication quality between the UE and the IAB node 103 is good, there is a high possibility that the communication quality can be maintained by performing group HO during handover of the IAB node 103 in order to continue communication with the IAB node 103. Therefore, in the present embodiment, the IAB node 103 judges that the group HO condition is satisfied if the communication quality between the processing target UE is a predetermined threshold value or higher, and judges that the group HO condition is not satisfied if the communication quality is not the predetermined threshold value or higher. The predetermined threshold value may be a threshold value greater than a second predetermined threshold value used to judge whether or not a UE whose communication quality has dropped is to simply be handed over to another base station when the IAB node 103 has not judged that the connection destination is to be switched. For example, even if a UE has normal or slightly poor communication quality with the node 103 and it is determined that handover is not necessary when the second predetermined threshold value is used as the determination condition, it can be judged in step S501 that the group HO condition is not satisfied.

The parameter value indicating the communication quality is, for example, the RSSI, SNR, MCS, communication speed, or signal-to-interference- and-noise ratio (SINR), or may be a value that is based on a combination of one or more of such values. Here, an example will be described in which the RSSI is used as the parameter value indicating the communication quality. When the RSSI is used as the parameter value indicating the communication quality, the RSSI may be acquired by the IAB node 103 by measurement performed based on a received signal from the processing target UE. Alternatively, a UE may acquire the RSSI by measurement, and the IAB node 103 may receive a measurement report from the UE.

Here, a UE may measure the communication quality using, for example, an SSB periodically transmitted (broadcast) from the IAB node 103. The SSB is a synchronization signal/broadcast channel block (SS/PBCH block) consisting of a synchronization signal (SS) and a physical broadcast channel (PHCH). The SSB is periodically transmitted from the base station mainly for the purpose of allowing the UE to detect the cell ID and reception timing when starting communication. In NR, the SSB is also used to measure reception quality for each cell. In the present embodiment, the IAB donors 101 and 102 and the IAB node 103 periodically transmit the SSB. The UEs 110 to 112 can measure the communication quality (reception quality) using the SSB received from the IAB donors 101 and 102 and the IAB node 103.

If the processing target UE satisfies the group HO condition (e.g., if the RSSI is the threshold value or higher), the IAB node 103 advances the process from step S501 to S502. In step S502, the IAB node 103 determines that the processing target UE is a UE to be targeted for group HO, and advances the process to step S504. On the other hand, if the processing target UE does not satisfy the group HO condition (e.g., if the RSSI is not the threshold value or higher), the IAB node 103 advances the process from step S501 to S503. In step S503, the IAB node 103 determines that the processing target UE is a UE not to be targeted for group HO (a UE not to be targeted for group HO), and advances the process to step S504.

In step S504, the IAB node 103 judges whether or not processing has been completed for all UEs connected to the IAB node 103. If processing has been completed for all UEs, the IAB node 103 ends the determination processing according to the procedure in FIG. 5, whereas if processing has not been completed for all UEs, the IAB node 103 returns the process to step S500, selects the next processing target UE, and executes the processing of step S501 again.

Note that a condition other than the above-described condition (the communication quality (a parameter value indicating the communication quality) is a predetermined threshold value or higher) may be set as the group HO condition. For example, the above-described group HO condition may be set to the condition that a parameter value indicating the communication quality is a threshold value or higher for a predetermined period of time and is in a predetermined range.

### < HO Processing for UE not to be Targeted for Group HO>

FIG. 6 is a sequence diagram showing an example of HO processing for a UE not to be targeted for group HO (UE 112) according to the present embodiment. As in the above example, it is assumed here that in the processing of determining a UE which is not to be targeted for group HO (step S401), it has been determined that the UE 112 is a UE not to be targeted for group HO.

In step S600, the UE 112 is performing data communication for the execution of an application via the CN 130. Data related to the application is relayed between the UE 112 and the CN 130 by the IAB donor 101 and the IAB node 103. In step S403 of FIG. 4, the IAB node 103 executes processing according to the sequence for each UE not to be targeted for HO.

In step S602, the IAB node 103 causes the UE 112 to execute communication quality measurement that is based on received signals from the IAB donors or nodes in the vicinity of the UE 112 (in this example, from the IAB donors 101 and 102). The UE 112 measures the reception quality of the SSB transmitted from the IAB donors or nodes in the vicinity of the UE 112 in accordance with the instruction from the IAB node 103. Then, in step S603, the UE 112 transmits, to the IAB node 103, the measurement results obtained in step S602 (in this example, the measurement results of the reception quality corresponding to the IAB donors 101 and 102).

In step S604, the IAB node 103 determines a handover destination for the UE 112 based on the measurement results received from the UE 112. In this example, the IAB donor 101 is determined to be the handover destination for the UE 112. In step S605, the IAB node 103 requests the IAB donor 101, which was determined to be the handover destination of the UE 112, to accept the handover of the UE 112. In this example, the IAB donor 101 permits handover of the UE 112 to the IAB donor 101 in response to the request from the IAB node 103.

The IAB node 103 performs handover processing for handover of the UE 112 to the IAB donor 101 in accordance with permission from the IAB donor 101. Specifically, in step S606, the IAB node 103 instructs the UE 112 to perform handover to the IAB donor 101. Also, in step S607, the IAB node 103 forwards the session information of the UE 112 to the IAB donor 101.

Upon receiving the handover instruction from the IAB node 103, in step S608, the UE 112 performs synchronization processing with the IAB donor 101 for handover from the IAB node 103 to the IAB donor 101. Specifically, the UE 112 receives the SSB broadcast from the IAB donor 101 and establishes a connection with the IAB donor 101 by performing synchronization processing with the IAB donor 101 using the received SSB. Note that the UE 112 may maintain the connection with the IAB node 103 at this stage instead of disconnecting.

Furthermore, upon receiving the session information of the UE 112 from the IAB node 103, in step S609, the IAB donor 101 transmits, to the CN 130 (a network node in the CN 130), a path switching request for the communication path for communication with the UE 112. In the case of permitting path switching based on the received request, in steps S610 and S611, the CN 130 switches the communication path for communication with the UE 112 from a communication path passing through the IAB node 103 to a communication path passing through the IAB donor 101. At this time, the session information of the UE 112 that has already been transferred from the IAB node 103 to the IAB donor 101 starts to be used. Also, the UE 112 disconnects from the IAB node 103.

After the communication path switch is completed, in step S612, communication for the running application can be seamlessly continued by the UE 112 with the CN 130 via the IAB donor 101. Through the above-described sequence, handover processing is executed for the UE 112 that is not to be targeted for group HO during handover of the IAB node 103.

### < HO Processing For UE Targeted for Group HO>

FIG. 7 is a sequence diagram showing an example of HO processing (group HO processing) for the UEs to be targeted for group HO (UEs 110 and 111) according to the present embodiment. As in the above example, it is assumed here that in the processing of determining a UE which is to be targeted for group HO (step S401), it has been determined that the UEs 110 and 111 are each a UE to be targeted for group HO.

Upon detecting a drop in the RSSI in communication with the connected IAB donor 101 (S400), the IAB node 103 determines that group HO processing is to be executed for the UEs to be targeted for group HO (step S405). However, in this example, a case will be described in which HO processing for the IAB node 103 and group HO processing for the UEs to be targeted for group HO are executed under the control of the IAB donor 101.

In step S700, the UEs 110 and 111 are performing data communication for the execution of an application via the CN 130. Data related to the application is relayed between the CN 130 and the UEs 110 and 111 by the IAB donor 101 and the IAB node 103.

In step S701, the IAB donor 101 detects a drop in the RSSI (the RSSI based on a received signal from the IAB node 103) in communication with the IAB node 103. For example, when the RSSI in communication with the IAB node 103 falls below a predetermined threshold value, the IAB donor 101 judges that the RSSI dropped. Upon detecting the drop in the RSSI in communication with the IAB node 103, the IAB donor 101 causes the IAB node 103 to execute communication quality measurement for determining handover destination of handover from the IAB donor 101.

Specifically, in step S702, the IAB donor 101 causes the IAB node 103 to execute communication quality measurement that is based on received signals from the IAB donors or nodes in the vicinity of the IAB node 103 (in this example, from the IAB donor 102). The IAB node 103 measures the reception quality of the SSB transmitted from the IAB donors or nodes in the vicinity of the IAB node 103 in accordance with the instruction from the IAB donor 101. Then, in step S703, the IAB node 103 transmits the measurement result obtained in step S702 (in this example, the measurement result of the reception quality corresponding to the IAB donor 102) to the IAB donor 101.

In step S704, the IAB donor 101 determines the handover destination of the IAB node 103 based on the measurement result received from the IAB node 103. In this example, the IAB donor 102 is determined to be the handover destination of the IAB node 103. In step S705, the IAB donor 101 requests the IAB donor 102, which has been determined to be the handover destination of the IAB node 103, to accept the handover of the IAB node 103. In this example, the IAB donor 102 permits handover of the IAB node 103 to the IAB donor 102 in response to the request from the IAB donor 101.

The IAB donor 101 performs handover processing for handover of the IAB node 103 to the IAB donor 102 in accordance with permission from the IAB donor 102. Specifically, in step S706, the IAB donor 101 instructs the IAB node 103 to perform handover to the IAB donor 102. Upon receiving the handover instruction from the IAB donor 101, in step S707, the IAB node 103 transfers, to the IAB donor 101, the session information of the UEs to be targeted for group HO (in this example, the UEs 110 and 111) among the UEs currently connected to the IAB node 103. In step S708, the IAB donor 101 transfers, to the IAB donor 102, the session information of the IAB node 103 and the session information of the UEs 110 and 111 that are UEs to be targeted for group HO, which has been transferred from the IAB node 103.

Upon receiving the handover instruction from the IAB donor 101, in step S709, the IAB node 103 then performs synchronization processing with the IAB donor 102 for handover (group HO) from the IAB donor 101 to the IAB donor 102. Specifically, the IAB node 103 receives the SSB broadcast from the IAB donor 102 and establishes a connection with the IAB donor 102 by performing synchronization processing with the IAB donor 102 using the received SSB. Note that the IAB node 103 may maintain the connection with the IAB donor 101 at this stage instead of disconnecting.

Also, in step S710, the IAB donor 101 transmits, to the CN 130 (a network node in the CN 130), a path switching request for the communication path for communication with the IAB node 103. In the case of permitting path switching based on the received request, in steps S711 and S712, the CN 130 switches the communication path for communication with the IAB node 103 from a communication path passing through the IAB donor 101 to a communication path passing through the IAB donor 102. At this time, the session information of the IAB node 103 and the session information of the UEs 110 and 111, which have already been transferred to the IAB donor 102, start to be used. Also, the IAB node 103 disconnects from the IAB donor 101.

After the communication path switch is completed, in step S713, communication for the running application can be seamlessly continued by the UEs 110 and 111 with the CN 130 via the IAB node 103 and the IAB donor 102. Through the above-described sequence, handover processing (group HO processing) is executed for the IAB node 103 and the UEs 110 and 111, which are targeted for group HO, among the UEs currently connected to the IAB node 103.

Lastly, a description will be given for UE handover processing in the case where the IAB node 103 (not shown) has not judged that its connection destination is to be switched. In the case of not judging that its connection destination is to be switched, the IAB node 103 determines whether or not to perform handover processing based on the second predetermined threshold value described above and the measurement results of the radio wave reception quality of surrounding IAB nodes received from the UEs. For example, in the case where the communication quality between a UE and an IAB node has deteriorated to such an extent that immediate handover is desirable, control is performed to hand over that UE to another base station. The mechanism for handover to another base station is similar to the processing shown in FIG. 6, and therefore a description thereof will be omitted. The difference from the above-described processing performed when it is judged that the connection destination is to be switched is that whether or not handover is to be performed is judged using the second predetermined threshold value that is smaller than the above-described predetermined threshold value. In handover processing performed using the second predetermined threshold value, in the case of a UE whose communication quality with the node 103 is normal or slightly poor, it is not judged that handover is necessary. On the other hand, in the case of a UE whose communication quality is worse than normal or slightly poor, it is judged that handover is necessary, and handover processing is executed.

As described above, before performing handover in which the connection destination for communication with CN 130 is switched to another IAB donor or node (e.g., in a case where the execution of handover is predicted), the IAB node 103 of the present embodiment performs determination processing, for each UE connected to the IAB node 103, of determine, based on whether or not a predetermined condition is satisfied, whether or not the connection destination of the UE is to be switched together with the IAB node 103. For each UE for which it has been determined in the determination processing that the connection destination is not to be switched together with the IAB node 103, the IAB node 103 performs communication control for handover to switch the connection destination from the IAB node 103 to another wireless base station. Also, for each UE for which it has been determined in the determination processing that the connection destination is to be switched together with the IAB node 103, the IAB node 103 executes group HO in which the IAB donor 102 is the handover destination.

In this way, the IAB node 103 is configured to be able to distinguish between whether or not group HO is to be performed for each UE under control of the IAB node 103 when performing handover to another IAB donor or node. Thus, for example, appropriate communication control (handover processing) can be realized individually for UEs located inside and outside the bus 140 in which the IAB node 103 is installed. Therefore, according to the present embodiment, when the IAB node 103 performs handover, it is possible to perform appropriate communication control individually for the UEs under control of the IAB node 103.

### Second Embodiment

In the first embodiment, an example is described in which HO processing for the IAB node 103 and group HO processing for UEs to be targeted for group HO are executed under the control of the IAB donor 101. In the second embodiment, an example will be described in which the IAB node 103 actively executes HO processing for the IAB node 103 and group HO processing for the UEs to be targeted for group HO. In the following, descriptions will not be given for portions similar to the first embodiment.

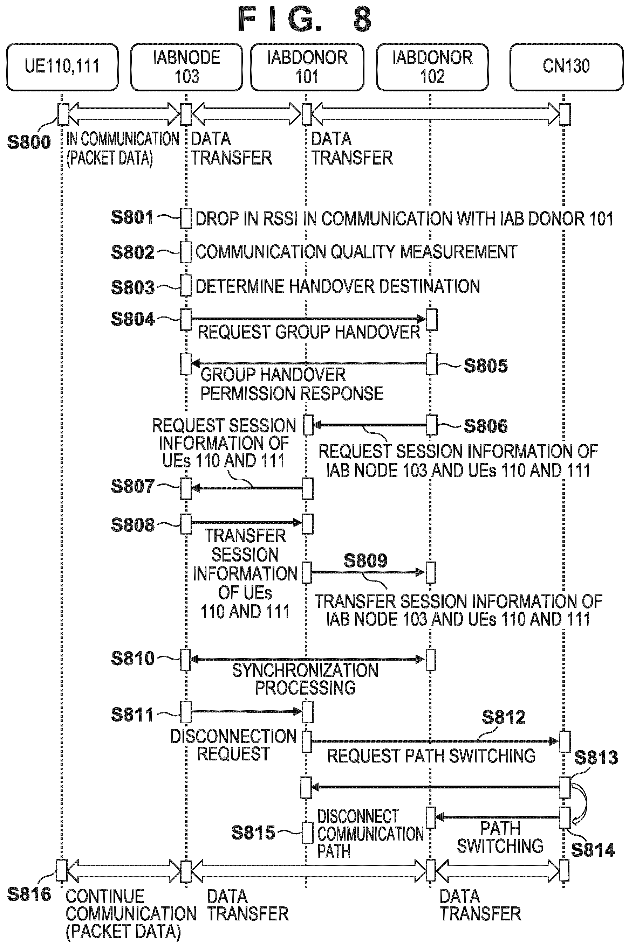

FIG. 8 is a sequence diagram showing an example of HO processing (group HO processing) for UEs to be targeted for group HO (the UEs 110 and 111) according to the present embodiment. Similarly to the above example, it is assumed here that, in the processing of determining UE to be targeted for group HO (step S401), it has been determined that the UEs 110 and 111 are to be targeted for group HO.

Upon detecting a drop in the RSSI in communication with the connected IAB donor 101 (S400), the IAB node 103 determines that group HO processing is to be executed for the UEs to be targeted for group HO (step S405).

In step S800, the UEs 110 and 111 are performing data communication for the execution of an application via the CN 130. Data related to the application is relayed between the CN 130 and the UEs 110 and 111 by the IAB donor 101 and the IAB node 103.

In step S801, the IAB node 103 detects a drop in the RSSI in communication with the IAB donor 101 (the RSSI based on a received signal from the IAB donor 101). For example, when the RSSI in communication with the IAB donor 101 falls below a predetermined threshold value, the IAB node 103 judges that the RSSI has dropped. Upon detecting a drop in the RSSI in communication with the IAB donor 101, the IAB node 103 executes communication quality measurement for determining the handover destination in handover from the IAB donor 101.

Specifically, in step S802, the IAB node 103 executes communication quality measurement based on received signals from the IAB donors or nodes in the vicinity of the IAB node 103 (measurement of the reception quality of the SSB transmitted from the IAB donors or nodes). In step S803, the IAB node 103 determines a handover destination for the IAB node 103 based on the measurement results obtained in step S802. In this example, the IAB node 103 detects that the reception quality (RSSI) of the SSB received from the IAB donor 102 is good (e.g., a predetermined threshold value or higher), and determines the IAB donor 102 as the handover destination for handover from the IAB donor 101.

In step S804, the IAB node 103 requests the IAB donor 102, which has been determined as the handover destination, to perform group HO together with the UEs to be targeted for group HO (in this example, the UEs 110 and 111). In this example, the IAB donor 102 permits group HO to the IAB donor 102 in response to the request from the IAB node 103. In step S805, the IAB donor 102 transmits, to the IAB node 103, a permission response indicating that group HO to the IAB donor 102 is permitted. In response to permission from the IAB donor 102, the IAB node 103 performs processing for group HO to the IAB donor 102 according to the following processing.

In step S806, the IAB donor 102 requests the IAB donor 101, which is the handover source of the IAB node 103, to transfer session information for group HO to the IAB donor 102 by the IAB node 103. Upon receiving the request from the IAB donor 102, in step S807, the IAB donor 101 requests the IAB node 103 to transfer session information of the UEs to be targeted for group HO (in this example, the UEs 110 and 111). In response to the request from the IAB donor 101, in step S808, the IAB node 103 transfers, to the IAB donor 101, the session information of the UEs 110 and 111 to be targeted for group HO. In step S809, the IAB donor 101 transfers, to the IAB donor 102, the session information of the IAB node 103 and the session information of the UEs 110 and 111 targeted for group HO, which has been transferred from the IAB node 103.

Thereafter, in step S810, the IAB node 103 performs synchronization processing with the IAB donor 102 for handover from the IAB donor 101 to the IAB donor 102 (group HO). Specifically, the IAB node 103 receives the SSB broadcast from the IAB donor 102 and establishes a connection with the IAB donor 102 by performing synchronization processing with the IAB donor 102 using the received SSB. Upon establishing a connection with the IAB donor 102, in step S811, the IAB node 103 transmits a disconnection request to the IAB donor 101.

Upon receiving the disconnection request from the IAB node 103, in step S813, the IAB donor 101 transmits, to the CN 130 (a network node in the CN 130), a path switching request for the communication path for communication with the IAB node 103. In a case of permitting path switching based on the received request, in steps S813 and S814, the CN 130 switches the communication path for communication with the IAB node 103 from a communication path passing through the IAB donor 101 to a communication path passing through the IAB donor 102. At this time, the session information of the IAB node 103 and the session information of the UEs 110 and 111, which have already been transferred to the IAB donor 102, start to be used. Thereafter, in step S815, the IAB donor 101 disconnects the connection (communication path) between the IAB donor 101 and the IAB node 103.

After the communication path switching is completed, in step S816, communication for the running application can be seamlessly continued between the CN 130 and the UEs 110 and 111, via the IAB node 103 and the IAB donor 102. Through the above-described sequence, handover processing (group HO processing) is executed for the IAB node 103 and the UEs 110 and 111, which are to be targeted for group HO, among the UEs currently connected to the IAB node 103.

As described above, in the present embodiment, even in the case where the IAB node 103 actively executes HO processing for the IAB node 103 and group HO processing for the UEs to be targeted for group HO, it is possible to obtain advantages similar to those of the first embodiment. In other words, when the IAB node 103 performs handover, it is possible to perform appropriate communication control individually for the UEs under control of the IAB node 103.

### Other Embodiments

In the above-described embodiment, the condition for determining that a UE connected to the IAB node 103 is to be targeted for group HO (group HO condition) is that the communication quality (e.g., RSSI) between the UE and the IAB node 103 is a predetermined threshold value or higher. The group HO condition may be set to a different condition.

For example, the group HO condition may be set to the condition that the UE is connected to the IAB node 103 and is in a communicating state in which communication is being performed (e.g., a state in which communication is being performed to execute an application). The communicating state, in which the UE is performing communication, may include, for example, an RRC INACTIVE state and an RRC CONNECTED state among RRC states. Alternatively, the group HO condition may be the condition that the UE has continued to be in such a communicating state for a predetermined period of time.

Furthermore, as another example, the group HO condition may be a condition using movement information or location information of the IAB node 103. For example, the condition may be that the UE has been traveling in the same direction as the IAB node 103 for a predetermined period of time. In this case, the IAB node 103 may further include an inertial measurement unit (IMU) 211, a global positioning system (GPS) control unit 212, and a GPS antenna 213, as shown in FIG. 2B. Accordingly, the IAB node 103 can acquire information indicating the movement direction and position thereof. The IAB node 103 may also acquire information from each connected UE indicating the movement direction and location thereof.

Also, the IAB node 103 may transmit two types of broadcast signals (e.g., SSB) having different signal levels (signal strength) and determine whether or not a UE is to be targeted for group HO based on whether or not the UE can receive the broadcast signals. In this case, the group HO condition may be that the UE has been able to receive at least the broadcast signal with the lower signal level out of the two types of broadcast signals having different signal levels (signal strength) transmitted from the IAB node 103.

Even if such group HO conditions are used, it is possible to obtain advantages similar to those of the first and second embodiments. In other words, when the IAB node 103 performs handover, it is possible to perform appropriate communication control individually for the UEs under control of the IAB node 103.

The present invention can be implemented by processing of supplying a program for implementing one or more functions of the above-described embodiments to a system or apparatus via a network or storage medium, and causing one or more processors in the computer of the system or apparatus to read out and execute the program. The present invention can also be implemented by a circuit (for example, an ASIC) for implementing one or more functions.

The present invention is not limited to the above embodiments and various changes and modifications can be made within the spirit and scope of the present invention. Therefore, to apprise the public of the scope of the present invention, the following claims are made.

This application claims priority from Japanese Patent Application No. 2022-124992 filed August 4, 2022, which is hereby incorporated by reference herein.

## Claims

1. A mobile communication device having a relay function of relaying communication between a wireless base station and a wireless terminal, the mobile communication device comprising:
determining means for performing, before performing handover in which a connection destination for communication with a core network is switched to another wireless base station or another communication device having the relay function, determination processing of determining, for each wireless terminal connected to the mobile communication device, whether or not the connection destination is to be switched together with the mobile communication device, based on whether or not a predetermined condition is satisfied; and
controlling means for performing, for a wireless terminal for which it has been determined in the determination processing that the connection destination is not to be switched together with the mobile communication device, communication control for handover to switch the connection destination from the mobile communication device to another wireless base station.

2. The mobile communication device according to claim 1,
wherein the controlling means performs group handover for a wireless terminal for which it has been determined in the determination processing that the connection destination is to be switched together with the mobile communication device.

3. The mobile communication device according to claim 2,
wherein in a case of performing handover to a handover destination determined according to movement of the mobile communication device, the controlling means performs the group handover by performing handover in which the connection destination is switched to the handover destination together with the wireless terminal for which it has been determined that the connection destination is to be switched together with the mobile communication device.

4. The mobile communication device according to any one of claims 1 to 3, further comprising:
judging means for judging whether or not handover of the mobile communication device to another wireless base station or another communication device is necessary, based on a communication quality of communication with a wireless base station or a communication device having the relay function to which the mobile communication device is connected,
wherein the determining means performs the determination processing in a case where the judging means judged that handover of the mobile communication device is necessary.

5. The mobile communication device according to any one of claims 1 to 4,
wherein the predetermined condition is that a parameter value indicating a communication quality between the mobile communication device and a wireless terminal connected to the mobile communication device is equal to or greater than a predetermined threshold value.

6. The mobile communication device according to claim 5,
wherein the parameter value indicating the communication quality is a received signal strength indicator (RSSI) obtained by measurement performed based on a received signal from the wireless terminal connected to the mobile communication device.

7. The mobile communication device according to claim 5,
wherein the parameter value indicating the communication quality is a RSSI received as a measurement report from the wireless terminal connected to the mobile communication device, the RSSI being obtained by measurement performed based on a broadcast signal transmitted from the mobile communication device.

8. The mobile communication device according to claim 7,
wherein the broadcast signal is a synchronization signal/broadcast channel block (SSB).

9. The mobile communication device according to any one of claims 1 to 4,
wherein the predetermined condition is that a parameter value indicating a communication quality of communication between the mobile communication device and a wireless terminal connected to the mobile communication device is equal to or greater than a predetermined threshold value for a predetermined time, and is in a predetermined range.

10. The mobile communication device according to any one of claims 1 to 4,
wherein the predetermined condition is that a wireless terminal connected to the mobile communication device is in a communicating state of performing communication with the core network.

11. The mobile communication device according to any one of claims 1 to 4,
wherein the predetermined condition is that a wireless terminal connected to the mobile communication device has been in a communicating state of performing communication with the core network, for a predetermined time.

12. The mobile communication device according to claim 10 or 11,
wherein the communicating state is, among resource control (RRC) states, an RRC INACTIVE state or an RRC CONNECTED state.

13. The mobile communication device according to any one of claims 1 to 4,
wherein the predetermined condition is that a wireless terminal connected to the mobile communication device has been moving in the same movement direction as the mobile communication device for a predetermined time.

14. The mobile communication device according to any one of claims 1 to 4,
wherein the predetermined condition is that a wireless terminal connected to the mobile communication device is able to receive at least a second broadcast signal, out of a first broadcast signal and the second broadcast signal that are transmitted from the mobile communication device, the second broadcast signal having a lower signal level than the first broadcast signal.

15. The mobile communication device according to any one of claims 1 to 14,
wherein the relay function is a function to perform relaying according to integrated access and backhaul (IAB) in 3rd Generation Partnership Project (3GPP),
the wireless base station is an IAB donor, and
the mobile communication device is a mobile IAB node.

16. A method for controlling a mobile communication device having a relay function of relaying communication between a wireless base station and a wireless terminal, the method comprising:
performing, before performing handover in which a connection destination for communication with a core network is switched to another wireless base station or another communication device having the relay function, determination processing of determining, for each wireless terminal connected to the mobile communication device, whether or not the connection destination is to be switched together with the mobile communication device, based on whether or not a predetermined condition is satisfied; and
performing, for a wireless terminal for which it has been determined in the determination processing that the connection destination is not to be switched together with the mobile communication device, communication control for handover to switch the connection destination from the mobile communication device to another wireless base station.

17. A program for causing a computer to execute the method according to claim 16.
